(19) Europäisches Patentamt
European Patent Office
Office européen des brevets

(11) **EP 4 744 771 A1**

(12) **EUROPEAN PATENT APPLICATION**
published in accordance with Art. 153(4) EPC

(43) Date of publication:
**20.05.2026 Bulletin 2026/21**

(21) Application number: 24879135.2

(22) Date of filing: 18.10.2024

(51) International Patent Classification (IPC):
*B01J 23/22* (2006.01)        *B01J 32/00* (2006.01)
*B01J 37/00* (2006.01)        *B01D 53/86* (2006.01)

(52) Cooperative Patent Classification (CPC):
B01D 53/86; B01J 21/00; B01J 23/22;
B01J 27/055; B01J 37/00; B01J 37/04;
B01J 37/08; C01B 17/79; C01B 17/80

(86) International application number:
**PCT/CN2024/125826**

(87) International publication number:
**WO 2025/082495 (24.04.2025 Gazette 2025/17)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 20.10.2023 CN 202311366228

(71) Applicants:
• **China Petroleum & Chemical Corporation
  Beijing 100728 (CN)**
• **Sinopec Nanjing Research Institute of Chemical
  Industry Co., Ltd.
  Nanjing, Jiangsu 210048 (CN)**
• **Sinopec Nanjing Chemical Industries Co., Ltd.
  Nanjing, Jiangsu 210048 (CN)**

(72) Inventors:
• **WU, Lin
  Nanjing, Jiangsu 210048 (CN)**

• **LIU, Ming
  Nanjing, Jiangsu 210048 (CN)**
• **HE, Zhiyong
  Nanjing, Jiangsu 210048 (CN)**
• **DONG, Tianlei
  Nanjing, Jiangsu 210048 (CN)**
• **LI, Haitao
  Nanjing, Jiangsu 210048 (CN)**
• **PENG, Jie
  Nanjing, Jiangsu 210048 (CN)**
• **HE, Jian
  Nanjing, Jiangsu 210048 (CN)**
• **YIN, Huiqin
  Nanjing, Jiangsu 210048 (CN)**
• **YU, Yang
  Nanjing, Jiangsu 210048 (CN)**
• **LI, Tingting
  Nanjing, Jiangsu 210048 (CN)**

(74) Representative: **karo IP
Patentanwälte PartG mbB
Steinstraße 16-18
40212 Düsseldorf (DE)**

(54) **VANADIUM-BASED CATALYST, AND PREPARATION METHOD THEREFOR AND USE THEREOF**

(57) Disclosed in the present invention are a vanadium-based catalyst, and a preparation method therefor and the use thereof. The vanadium-based catalyst comprises a carrier and a vanadium-based active material loaded on the carrier, wherein the vanadium-based catalyst is of a strip-shaped structure having a multi-petal-shaped cross section, the number of petals in the multi-petal-shaped cross section is at least three, and there are at least two through holes in the strip-shaped structure in the direction of length thereof; and the shape factor of the vanadium-based catalyst is 70-110. The vanadium-based catalyst of the present invention can be used in a wet sulfuric acid process, and the catalyst is low in terms of filling amount, can achieve a relatively high $SO_2$ conversion rate and a relatively low bed pressure drop by means of a relatively low filling amount, is particularly applicable to the preparation of sulfuric acid by means of the cracking of waste acid in the case of a relatively high impurity content of a feed gas, and is greatly advantageous during long-period operation.

EP 4 744 771 A1

**Description**

**CROSS-REFERENCE TO RELATED APPLICATIONS**

The application claims the benefit of the China patent application No. "202311366228.8", filed on October 20, 2023, the content of which is specifically and entirely incorporated herein by reference.

**TECHNICAL FIELD**

The present invention relates to the technical field of catalyst preparation, in particular to a vanadium-based catalyst, and a preparation method therefor and a use thereof.

**BACKGROUND ART**

Most of the alkylation units adopt a sulfuric acid process which will produce large volumes of alkylated waste acids. The waste acid regeneration unit is an environmental protection device provided along with the alkylation unit, its process basically uses waste sulfuric acid for incineration and pyrolysis in the waste acid pyrolysis furnace, and a vanadium-based catalyst for converting $SO_2$ in the pyrolysis gas to $SO_3$ to finally produce the commodity sulfuric acid, the regenerated sulfuric acid is returned to the alkylation unit and recycled as a catalyst for the sulfuric acid alkylation reaction. However, the dust content in the waste acid pyrolysis gas is high and easily causes the hardening of the catalyst bed layer in the subsequent process.

The industrial production of sulfuric acid mainly uses a catalytic system consisting of vanadium pentoxide as the main catalyst, potassium sulfate/sodium sulfate/cesium sulfate as the co-catalysts, and diatomite as the carrier, the catalyst is also called the vanadium-based catalyst. The current researches on improving performance of the vanadium-based catalyst mainly focus on the catalyst active ingredients, the co-catalysts, the carrier, and the preparing process, but the researches on the shape of said vanadium-based catalyst are rare.

Currently, the vanadium-based catalysts adopted by the sulfuric acid industry have a variety of shapes including cylinder, flake, sphere, ring, plum blossom and the like, the vanadium-based catalysts with the shape of cylinder, ring, and plum blossom are commonly used in recent years. An approximation for the industrial calculation of catalyst layer resistance is provided in the Sulfuric Acid Work Manual. The catalyst layer resistance can also be calculated according to the following formula: $\Delta P = 5494 \times W^{1.7} \times r^{0.7} \times h$, where W denotes the gas velocity, r denotes the gas density, h denotes the catalyst loading height, and 5494 is associated with the particle shape parameters of a cylindrical catalyst layer. As can be seen, the particle shape of the catalyst will directly influence the flow and diffusion of the reactant gas, thereby affecting the catalyst activity and the bed pressure drop. Therefore, it is particularly important to investigate the relationship between the properties of the vanadium-based catalyst and its particle shape.

**SUMMARY OF THE INVENTION**

The present invention aims to overcome the defects in the prior art with respect to the large bed pressure drop of the vanadium-based catalyst, and provides a vanadium-based catalyst and a preparation method therefor and a use thereof. The present invention improve properties of the vanadium-based catalyst by controlling the shape factor $\varnothing_s$ of the vanadium-based catalyst, it can achieve a relatively high $SO_2$ conversion rate and a relatively low bed pressure drop by means of a relatively low loading amount.

The present inventors have extensively studied to find that the shape factor of the vanadium-based catalyst is influenced by many aspects such as an outer diameter of the catalyst particles, the diameter of the internal apertures, the number of internal apertures, the aperture ratio, and the bulk density; the shape factor further influences the activity and fluid-dynamic properties of the vanadium-based catalyst.

In combination with the industrial reactor characteristics of the sulfuric acid plant, the present inventors have discovered that by controlling the shape factor of the vanadium-based catalyst, the reaction gas flow is distributed more uniformly across the bed layers with a certain residence time, such an arrangement can improve hydrodynamic properties of the catalyst while ensuring the $SO_2$ conversion rate.

In order to achieve the above objects, the first aspect of the present invention provides a vanadium-based catalyst comprising a carrier and a vanadium-based active material loaded on the carrier, the vanadium-based catalyst is of a strip-shaped structure having a multi-petal-shaped cross section, the number of petals in the multi-petal-shaped cross section is at least three, and there are at least two through holes in the strip-shaped structure in the direction of length thereof; and the shape factor $\varnothing_s$ of the vanadium-based catalyst is within the range of 70-110;

$$\emptyset_s = f \times \frac{\rho \varepsilon^3}{NDd^2(1-\varepsilon)} \qquad \text{Formula (1)}$$

In formula (1), $\emptyset_s$ denotes a shape factor;

f denotes a correction coefficient, f=A/B, A=2.5* $10^{-4}$, B denotes the number of petals of a multi-petal-shaped cross section;
$\rho$ denotes a bulk density of the vanadium-based catalyst, and the unit is $kg/m^3$;
$\varepsilon$ denotes an aperture ratio of the vanadium-based catalyst;
N denotes the aperture number of said through holes;
d denotes a pore diameter of the through holes, and the unit is m;
D denotes an outer diameter of the multi-petal-shaped cross section, and the unit is m.

The second aspect of the present invention provides a method for preparing a vanadium-based catalyst, the method comprises: kneading a vanadium-containing compound with diatomite, extruding strips to form a strip-shaped structure having a multi-petal-shaped cross section, the number of petals in the multi-petal-shaped cross section is at least three, and there are at least two through holes in the strip-shaped structure in the direction of length thereof; then carrying out a first calcination such that the shape factor $\emptyset_s$ of the vanadium-based catalyst is within the range of 70-110;

$$\emptyset_s = f \times \frac{\rho \varepsilon^3}{NDd^2(1-\varepsilon)} \qquad \text{Formula (1)}$$

In formula (1), $\emptyset_s$ denotes a shape factor;

f denotes a correction coefficient, f = A/B, A =2.5*$10^{-4}$, B denotes the number of petals of a multi-petal-shaped cross section;
$\rho$ denotes a bulk density of the vanadium-based catalyst, and the unit is $kg/m^3$;
$\varepsilon$ denotes an aperture ratio of the vanadium-based catalyst;
N denotes the aperture number of said through holes;
d denotes a pore diameter of the through holes, and the unit is m;
D denotes an outer diameter of the multi-petal-shaped cross section, and the unit is m.

The third aspect of the present invention provides a use of the vanadium-based catalyst according to the first aspect or the vanadium-based catalyst produced with the method according to the second aspect for catalytically oxidizing $SO_2$ to generate $SO_3$.

The fourth aspect of the present invention provides a method for preparing sulfuric acid with the wet process, the method comprises: contacting a feed gas with the vanadium-based catalyst under the conditions for catalytically oxidizing $SO_2$ to generate $SO_3$, then carrying out condensation; wherein the feed gas contains $SO_2$, $O_2$ and water; the vanadium-based catalyst is the vanadium-based catalyst according to the first aspect or the vanadium-based catalyst produced with the method according to the second aspect.

Due to the aforementioned technical scheme, the present invention produces the favorable technical effects as follows:

When the shape factor $\emptyset_s$ of the vanadium-based catalyst of the present invention is within the range of 70-110, the catalyst can be used for catalytically oxidizing $SO_2$ to generate $SO_3$, the vanadium-based catalyst can achieve a relatively high $SO_2$ conversion rate and a relatively low bed pressure drop by means of a relatively low loading amount.

The vanadium-based catalyst of the present invention is an anti-impedance type vanadium-based catalyst, which can be used in a method for preparing sulfuric acid with the wet process, and it is particularly applicable to the preparation of sulfuric acid by means of the cracking of waste acid in the case of a relatively high impurity content of a feed gas, and is greatly advantageous during long-period operation.

## DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the present invention provides a vanadium-based catalyst comprising a carrier and a vanadium-based active material loaded on the carrier, the vanadium-based catalyst is of a strip-shaped structure having a multi-petal-shaped cross section, the number of petals in the multi-petal-shaped cross section is at least three, and there are at least two through holes in the strip-shaped structure in the direction of length thereof; and the shape factor $\emptyset_s$ of the vanadium-based catalyst is within the range of 70-110;

$$\emptyset_s = f \times \frac{\rho \varepsilon^3}{N D d^2 (1-\varepsilon)} \qquad \text{Formula (1)}$$

In formula (1), $\emptyset_s$ denotes a shape factor;

f denotes a correction coefficient, f=A/B, A=2.5* $10^{-4}$, B denotes the number of petals of a multi-petal-shaped cross section;
$\rho$ denotes a bulk density of the vanadium-based catalyst, and the unit is $kg/m^3$;
$\varepsilon$ denotes an aperture ratio of the vanadium-based catalyst;
N denotes the aperture number of said through holes;
d denotes a pore diameter of the through holes, and the unit is m;
D denotes an outer diameter of the multi-petal-shaped cross section, and the unit is m.

According to the invention, the bed pressure drop of the vanadium-based catalyst has an important association with the particle shape of the vanadium-based catalyst. The present inventors have found that the shape factor of the vanadium-based catalyst is influenced by many aspects such as an outer diameter of the catalyst particles, the diameter of the internal apertures, the number of internal apertures, the aperture ratio, and the bulk density; the shape factor further influences the activity and fluid-dynamic properties of the vanadium-based catalyst. The present inventors have extensively studied to find when the shape factor $\emptyset_s$ of the vanadium-based catalyst of the present invention is within the range of 70-110, the catalyst can be used for catalytically oxidizing $SO_2$ to generate $SO_3$, the vanadium-based catalyst can achieve a relatively high $SO_2$ conversion rate and a relatively low bed pressure drop by means of a relatively low loading amount. If the shape factor $\emptyset_s$ is too low, such as below 70, it will influence the gas flow distribution in the bed layer, which results in a too short residence time of the gas in the catalyst bed layer, and consequently influences the conversion rate of $SO_2$ to causes that the conversion rate of $SO_2$ is low; if the shape factor $\emptyset_s$ is too high, such as above 110, it will result in a high bed pressure drop, which imposes a great influence on the smooth running of the plant.

Combining the features of the sulfuric acid plant industrial reactor, the present invention allows for more uniform distribution of the reaction gas flow across the bed layers with an appropriate residence time by controlling the shape factor $\emptyset_s$ of the vanadium-based catalyst while ensuring $SO_2$ conversion rate, improves the hydrodynamic properties of the catalyst, greatly reduces the loading amount of the catalyst, reduces production costs, and also decreases the bed pressure drop.

According to the invention, in the case that the catalyst loading volume in the reactor is consistent, the present invention lowers the bed pressure drop by controlling the shape factor $\emptyset_s$ of the vanadium-based catalyst.

The vanadium-based catalyst of the present invention is an anti-impedance type vanadium-based catalyst, which can be used in a method for preparing sulfuric acid with the wet process, is particularly applicable to the preparation of sulfuric acid by means of the cracking of waste acid in the case of a relatively high impurity content of a feed gas, and is greatly advantageous during long-period operation.

According to the invention, in a strip-shaped structure having a multi-petal-shaped cross section, the cross section of the multi-petal-shaped cross section has a symmetrical petal-shaped structure, such as three petals, four petals, five petals, six petals; the strip-shaped structure is preferably a cylindrical strip shape.

According to the present invention, the correction coefficient f is related to the number of petals in the multi-petal-shaped cross section, the more the number of petals, the smaller the correction coefficient; the smaller the number of petals, and the larger the corresponding correction coefficient.

According to the invention, an outer diameter D of the multi-petal-shaped cross section refers to the longest straight line distance from one side edge to the other side edge of the multi-petal-shaped cross section. When the cross section of the multi-petal-shaped cross section is a symmetrical petaloid structure, the outer diameter D of the multi-petal-shaped cross section refers to the diameter of the largest circumscribed circle of the multi-petal-shaped cross section.

According to the present invention, both the pore diameter d of through holes and the outer diameter D of a multi-petal-shaped cross section are measured by using a digital vernier caliper.

According to the present invention, the bulk density $\rho$ of the vanadium-based catalyst is measured according to the method stipulated by the China Chemical Industry Standard HG/T 4680-2014 "Test method for bulk density of fertilizer catalysts".

According to the present invention, the aperture ratio $\varepsilon$ of the vanadium-based catalyst refers to the ratio of the specific surface area of internal apertures to the total specific surface area of the vanadium-based catalyst.

According to the invention, the shape factor $\varnothing_s$ of the vanadium-based catalyst is within the range of 70-110, for example, 70, 75, 80, 85, 90, 95, 100, 105, 110, and a random value within the range consisting of any two numerical values.

According to some preferred embodiments of the invention, the shape factor $\varnothing_s$ of the vanadium-based catalyst is within the range of 80-100.

According to some embodiments of the invention, the carrier comprises diatomite; the content of $SiO_2$ is not less than 90wt% based on the total weight of the diatomite, and the mass ratio of $Fe_2O_3$ to $Al_2O_3$ is (0.02-0.1) : 1.

According to the present invention, the content of $SiO_2$ is not less than 90wt%, for example, 90wt%, 90.1wt%, 90.2wt%, 90.3wt%, 90.4wt%, 90.5wt%, 90.6wt%, 90.7wt%, 90.8wt%, 90.9wt%, 91wt%, 91.5wt%, 92wt%, 92.5wt%, 93wt%, 93.5wt%, 94wt%, 94.5wt%, 95wt%, 95.5wt%, 96wt%, and a random value within the range consisting of any two numerical values, preferably within the range of 92-95wt%.

According to the invention, the mass ratio of $Fe_2O_3$ to $Al_2O_3$ is 0.02:1, 0.03:1, 0.04:1, 0.05:1, 0.06:1, 0.07:1, 0.08:1, 0.09:1, 0.1:1, and a random value within the range consisting of any two numerical values, preferably within the range of (0.03-0.08) :1. According to some preferred embodiments of the present invention, the content of $SiO_2$ is 92-95wt% based on the total weight of the diatomite, and the mass ratio of $Fe_2O_3$ to $Al_2O_3$ is (0.03-0.08) : 1.

According to the invention, the diatomite structure is more stable with a higher strength by controlling the mass ratio of $Fe_2O_3$ to $Al_2O_3$ and controlling the content of $Al_2O_3$.

According to the present invention, by controlling the mass ratio of $Fe_2O_3$ to $Al_2O_3$ and controlling the content of $SiO_2$, the diatomite in the invention has a stable structure with a higher strength, the diatomite can be used as a carrier for preparing a catalyst, the prepared catalyst can maintain the high strength at the average pore diameter of 100-400nm, and improve the conversion rate of $SO_2$, indicating that a use of the diatomite as the carrier enables the vanadium-based catalyst to exhibit the high dispersity of active material.

According to some preferred embodiments of the present invention, the content of $Al_2O_3$ is 2.5-4wt%, for example, 2.5wt%, 2.8wt%, 3wt%, 3.2wt%, 3.5wt%, 3.8wt%, 4wt%, and a random value within the range consisting of any two numerical values, preferably 2.8-3.5wt%.

According to some preferred embodiments of the present invention, the content of $Fe_2O_3$ is not greater than 0.3wt%, for example, 0.05wt%, 0.1wt%, 0.15wt%, 0.2wt%, 0.25wt%, 0.3wt%, and a random value within the range consisting of any two numerical values, preferably 0.1-0.3wt%.

The diatomite in the present invention has a high content of $SiO_2$, and a low content of impurity $Fe_2O_3$, its strength and stability are higher than natural diatomite and conventional diatomite.

The diatomite according to the present invention has higher stability while meeting the above parameter ranges.

According to some embodiments of the invention, the diatomite is contained in an amount of 60-75wt%, for example, 60wt%, 62wt%, 65wt%, 66wt%, 67wt%, 68wt%, 69wt%, 70wt%, 71wt%, 72wt%, 73wt%, 74wt%, 75wt%, and a random value within the range consisting of any two numerical values, preferably 65-70wt%, based on the total weight of the vanadium-based catalyst.

In some embodiments of the invention, the diatomite has an average particle size of 0.3-1$\mu$m, for example 0.3$\mu$m, 0.4$\mu$m, 0.5$\mu$m, 0.6$\mu$m, 0.7$\mu$m, 0.8$\mu$m, 0.9$\mu$m, 1$\mu$m, and a random value within the range consisting of any two numerical values, preferably 0.3-0.7$\mu$m.

In some embodiments of the present invention, the diatomite is a melosira diatomite. In some embodiments of the invention, the shells of the diatomite may be hollow cylinders. Preferably, the shells are interconnected via small spines on their peripheries to form chain-like aggregates, and the pores on the cylindrical surfaces are connected to the central pore.

According to the present invention, diatomite is moulded into a hollow cylindrical body, which has an optimal strength and is not prone to rupture from the mechanical viewpoint. The original shape is desirably maintained during the processing process, therefore, the diatomite as a carrier can form a group having well-developed pores, it has good strength, and desirable mass transfer and heat transfer properties.

In some embodiments of the present invention, said diatomite has a loss on ignition within the range of 0.01-3wt%, preferably 0.015-1wt%.

According to the present invention, the loss on ignition is measured with the following method: a burning weighing method is used, in particular, a sample with an initial weight of 10g is weighed, with an accuracy of 0.0001g, the sample is placed in a fired ceramic crucible with a constant weight, the ceramic crucible is placed in a resistance heating furnace, slowly warmed to around 1,000°C, the temperature is kept for 15-20 minutes, the crucible is taken out and placed in a dryer and cooled to room temperature, and then weighed, and the obtained value is subsequently introduced into the formula: loss-on-ignition = initial weight of sample - net weight after ignition.

In some embodiments of the invention, said diatomite has a bulk density within the range of 0.3-0.5g/mL, preferably 0.35-0.45g/mL.

The present invention measures the bulk density of diatomite by using the plate stacking method.

According to some embodiments of the invention, the ratio of the outer diameter D of the multi-petal-shaped cross section to the pore diameter d of the through holes is (3-7) :1, for example, 3:1, 3.5:1, 3.7:1, 4:1, 4.2:1, 4.5:1, 4.7:1, 5:1, 5.2:1, 5.5:1, 5.7:1, 6:1, 6.2:1, and a random value within the range consisting of any two numerical values, preferably (4-6) :1, more preferably (4.5-5.7) :1.

According to the present invention, by controlling the ratio of the outer diameter D of the multi-petal-shaped cross section to the pore diameter d of the through holes to satisfy the above ranges, it is possible to effectively extend the residence time of the gas flow in the catalyst bed layer.

According to some embodiments of the invention, the ratio of the length L of the vanadium-based catalyst to the outer diameter D of the multi-petal-shaped cross section is (1-1.5) :1, for example, 1:1, 1:1.1, 1:1.2, 1:1.3, 1:1.4, 1:1.5, and a random value within the range consisting of any two numerical values, preferably (1-1.2) : 1.

According to the invention, when the ratio of the length L of the vanadium-based catalyst to the outer diameter D of the multi-petal-shaped cross section is controlled within the above range, the gas flow is distributed more uniformly in the catalyst bed layer.

According to some embodiments of the invention, the number of petals in the multi-petal-shaped cross section is within the range of 3-8, for example, 3, 4, 5, 6, 7, 8, within the range of 5-6.

According to some embodiments of the invention, the number N of said through holes is within the range of 2-7, for example, 2, 3, 4, 5, 6, 7, preferably within the range of 2-6.

According to some embodiments of the invention, the through holes are cylindrical.

According to the present invention, the bed pressure drop can be further reduced by controlling the number and shape of the through holes.

According to some embodiments of the invention, the pore diameter d of the through holes is within the range of 3-5mm, preferably within the range of 3-4mm.

According to some embodiments of the invention, the vanadium-based catalyst has an aperture ratio within the range of 0.09-0.25, preferably within the range of 0.12-0.22.

According to some embodiments of the invention, the vanadium-based catalyst has a bulk density within the range of 400-550kg/m$^3$, preferably within the range of 450-500kg/m$^3$.

According to some embodiments of the invention, the vanadium-based catalyst has a strength larger than or equal to 70N/cm, preferably within the range of 80-120N/cm, more preferably 90-120N/cm.

In the invention, the strength is expressed by a radial crush strength, which is measured according to the method stipulated in the China Chemical Industry Standard HG/T2782-2011 "Test method for single pellet crush strength of fertilizer catalysts".

According to some embodiments of the invention, the vanadium-based catalyst has an attrition and abrasion ratio less than or equal to 5%.

In the present invention, the attrition and abrasion ratio is measured according to the method stipulated in the China Chemical Industry Standard HG/T2976-2011 "Test method for attrition and abrasion of fertilizer catalysts", wherein the sample is dried at a temperature of (120 ± 5)°C for 2h.

According to some embodiments of the invention, the mass ratio of the carrier to the vanadium-based active material is (60-75) : (6-8.5), for example, (60-75) :6, (60-75) :6.2, (60-75) :6.5, (60-75) :6.8, (60-75) :7, (60-75) :7.2, (60-75) :7.5, (60-75) :7.8, (60-75) :8, (60-75) :8.2, (60-75) :8.5, and a random value within the range consisting of any two numerical values, preferably (65-70) : (6.5-8).

According to some embodiments of the invention, the vanadium-based active material comprises vanadium pentoxide.

According to some embodiments of the invention, the vanadium-based catalyst further comprises a potassium-containing compound, preferably potassium sulfate, loaded on the carrier.

According to some embodiments of the invention, the molar ratio of potassium element to vanadium element in the vanadium-based catalyst is (2-4) :1, for example, 2:1, 2.5:1, 3:1, 3.5:1, 3.9:1, 4:1, and a random value within the range consisting of any two numerical values, preferably (2.5-3.5) : 1.

In the present invention, the molar ratio of potassium element to vanadium element is also referred to as potassium/vanadium ratio. Too small potassium/vanadium ratio will affect activity of the vanadium-based catalyst, and too large potassium/vanadium ratio will increase the production cost.

In some embodiments of the invention, the content of potassium sulfate is within the range of 12-30wt%, based on the total weight of the vanadium-based catalyst, for example, the content is 12wt%, 15wt%, 18wt%, 20wt%, 22wt%, 25wt%, 30wt%, and a random value within the range consisting of any two numerical values, preferably within the range of 15-22wt%.

According to some embodiments of the invention, the vanadium-based catalyst further comprises an auxiliary agent loaded on the carrier; the mass ratio of said carrier to said auxiliary agent is (60-75) : (3.5-10), for example, (60-75) :3.5, (60-75) :4, (60-75) :4.5, (60-75) :5, (60-75) :5.5, (60-75) :6, (60-75) :6.5, (60-75) :7, (60-75) :7.5, (60-75) :8, (60-75) :8.5, (60-75) :9, (60-75) :9.5, (60-75) :10, and a random value within the range consisting of any two numerical values, preferably (65-70) : (4-8).

In some embodiments of the invention, the auxiliary agent is one or more selected from the group consisting of sodium sulfate, rubidium sulfate, cesium sulfate, lanthanum oxide, cerium oxide and praseodymium oxide.

In the present invention, the auxiliary agent may further enhance the low-temperature activity of the vanadium-based catalyst and decrease the activation temperature of the vanadium-based catalyst.

According to the present invention, the vanadium-based catalyst comprises, in addition to the carrier, the active ingredient and the auxiliary agent mentioned above, a binder and other substance, wherein the binder is selected from the group consisting of montmorillonite, attapulgite and the like.

In some embodiments of the invention, the content of the binder is 0.5-2.5wt%, for example 0.5wt%, 0.8wt%, 1wt%, 1.2wt%, 1.5wt%, 1.8wt%, 2wt%, 2.2wt%, 2.5wt%, and a random value within the range consisting of any two numerical values, preferably 1-2wt%, based on the total weight of the vanadium-based catalyst.

The second aspect of the present invention provides a method for preparing a vanadium-based catalyst, the method comprises: kneading a vanadium-containing compound with diatomite, extruding strips to form a strip-shaped structure having a multi-petal-shaped cross section, the number of petals in the multi-petal-shaped cross section is at least three, and there are at least two through holes in the strip-shaped structure in the direction of length thereof; then carrying out a first calcination such that the shape factor $\varnothing_s$ of the vanadium-based catalyst is within the range of 70-110;

$$\varnothing_s = f \times \frac{\rho\varepsilon^3}{NDd^2(1-\varepsilon)} \qquad \text{Formula (1)}$$

In formula (1), $\varnothing_s$ denotes a shape factor;

> f denotes a correction coefficient, $f = A/B$, $A = 2.5*10^{-4}$, B denotes the number of petals of a multi-petal-shaped cross section;
>
> $\rho$ denotes a bulk density of the vanadium-based catalyst, and the unit is $kg/m^3$;
>
> $\varepsilon$ denotes an aperture ratio of the vanadium-based catalyst;
>
> N denotes the aperture number of said through holes;
>
> d denotes a pore diameter of the through holes, and the unit is m;
>
> D denotes an outer diameter of the multi-petal-shaped cross section, and the unit is m.

The present inventors have found when the shape factor $\varnothing_s$ of the vanadium-based catalyst of the present invention is within the range of 70-110, the catalyst can be used for catalytically oxidizing $SO_2$ to generate $SO_3$, the vanadium-based catalyst can achieve a relatively high $SO_2$ conversion rate and a relatively low bed pressure drop by means of a relatively low loading amount. If the shape factor $\varnothing_s$ is too low, such as below 70, it will influence the gas flow distribution in the bed layer, which results in a too short residence time of the gas in the catalyst bed layer, and consequently influences the conversion rate of $SO_2$ to causes that the conversion rate of $SO_2$ is low; if the shape factor $\varnothing_s$ is too high, such as above 110, it will result in a high bed pressure drop, which imposes a great influence on the smooth running of the plant.

The present invention can utilize the shape factor $\varnothing_s$ for providing basis for the number of petals and aperture conditions required for the catalyst formation; prior to the catalyst formation, the formation parameters meeting the requirements may be initially fitted according to the formula of said shape factor $\varnothing_s$, such as an outer diameter of the catalyst particle, the diameter of the inner aperture, the number of inner apertures.

According to the invention, the shape factor $\varnothing_s$ of the vanadium-based catalyst is within the range of 70-110, for example, 70, 75, 80, 85, 90, 95, 100, 105, 110, and a random value within the range consisting of any two numerical values.

According to some preferred embodiments of the invention, the shape factor $\varnothing_s$ of the vanadium-based catalyst is within the range of 80-100.

According to some embodiments of the invention, the vanadium-based catalyst has an aperture ratio within the range of 0.09-0.25, preferably within the range of 0.12-0.22.

According to some embodiments of the invention, the vanadium-based catalyst has a bulk density within the range of 400-550kg/m³, preferably within the range of 450-500kg/m³.

According to some embodiments of the invention, the ratio of the outer diameter D of the multi-petal-shaped cross section to the pore diameter d of the through holes is (3-7) :1, preferably (4-6) : 1.

According to some embodiments of the invention, the number of petals in the multi-petal-shaped cross section is within the range of 3-8, preferably within the range of 5-6.

According to some embodiments of the invention, the number N of said through holes is within the range of 2-7, preferably within the range of 2-6.

According to the present invention, the parameters in formula (1) and the measurement methods can be obtained with reference to the preceding description, the contents will not be repeatedly described herein.

According to some embodiments of the invention, the step of kneading the vanadium-containing compound with diatomite comprises:

(1) separating and purifying a diatomite raw material and a dispersing agent in a hydrocyclone separator, drying, and then carrying out a secondary calcination to obtain a treated diatomite;
(2) carrying out neutralization reaction on vanadium water prepared from potassium hydroxide and vanadium pentoxide with sulfuric acid to obtain a reaction product; blending the reaction product with the treated diatomite, and an optional auxiliary agent and an optional binder, and then kneading the mixture.

According to the present invention, when a diatomite raw material is separately and purified by using a hydrocyclone separator, the impurities (e.g., $Fe_2O_3$, $Al_2O_3$, CaO, MgO) can be effectively removed and the bulk density is decreased, the purity of $SiO_2$ is increased, and the $SiO_2$ content reaches 90% or more, thus the structural stability and supporting strength of the diatomite carrier can be improved.

According to the present invention, the quality of natural diatomite has a great instability due to its geologic formation, the natural diatomite has a unstable and non-uniform structure, and the natural diatomite has a high content of impurities and a low content of $SiO_2$, resulting in insufficient support of the carrier on the active phase, and the strength of said catalyst cannot be guaranteed. Although the refined diatomite treated according to the prior art can be used as the carrier of the vanadium-based catalyst, it is impossible to solve the problem that the bed layer of the vanadium-based catalyst is prone to hardening. The treatment method provided by the present invention can simultaneously control the content of $SiO_2$ and the mass ratio of $Fe_2O_3$ to $Al_2O_3$ in the diatomite, the diatomite has a more stable structure with a higher strength, and can be used as the carrier for the preparation of the catalyst, and exhibits a high dispersity of the active material.

The present invention relates to a method for treating diatomite by using a physical process to optimize the iron/aluminum ratio of diatomite, thereby preventing the pickling process used during the traditional refining process from generating the waste water, and enabling the structure of the diatomite to be more stable through the high temperature treatment of second calcination, thus the treated diatomite has an improved plastic property, such a process can enhance strength of the catalyst and reduce the attrition and abrasion ratio of the catalyst, the catalyst has a longer sieving cycle, and the shape factor of particle under the same molding condition is also lower than that before the modification.

According to some embodiments of the invention, the hydrocyclone separator has a slurry-feeding pressure within the range of 0.2-1MPa, for example, 0.2MPa, 0.3MPa, 0.4MPa, 0.5MPa, 0.6MPa, 0.7MPa, 0.8MPa, 0.9MPa, 1MPa, and a random value within the range consisting of any two numerical values, preferably 0.3-0.8MPa; and a grading fineness within the range of 0.3-1μm, for example, 0.3μm, 0.4μm, 0.5μm, 0.6μm, 0.7μm, 0.8μm, 0.9μm, 1μm, and a random value within the range consisting of any two numerical values, preferably within the range of 0.3-0.7μm.

According to the invention, the average particle diameter of the treated diatomite is within the range of 0.3-1μm, preferably 0.3-0.7μm, by controlling the slurry-feeding pressure and the grading fineness of the hydrocyclone separator.

According to some embodiments of the invention, the temperature of the second calcination is within the range of 350-500°C, preferably within the range of 350-450°C; the time is 1-2h, preferably 1.2-2 h.

According to some embodiments of the invention, the diatomite raw material is a melosira diatomite.

Preferably, said diatomite has a silica content of 85% or more.

The diatomite raw material used in the present invention is of the natural melosira, with shell porosity being highest in diatomites, each of its pore volume, major pore diameter and specific surface area is larger than that of other genera, especially the internal surface.

According to some embodiments of the invention, the diatomite is one or more selected from the group consisting of the group consisting of Zhejiang diatomite, Yunnan diatomite, and Changbai diatomite.

According to some embodiments of the invention, the shells of the diatomite may be hollow cylinders. Preferably, the shells are interconnected via small spines on their peripheries to form chain-like aggregates, and the pores on the cylindrical surfaces are connected to the central pore.

According to some embodiments of the present invention, the content of $SiO_2$ in the treated diatomite is not less than 90wt%, preferably within the range of 92-95wt%; the mass ratio of $Fe_2O_3$ to $Al_2O_3$ in the treated diatomite is (0.02-0.1) :1, more preferably (0.03-0.08) : 1.

According to the present invention, the content of $SiO_2$ is not less than 90wt%, for example, 90wt%, 90.1wt%, 90.2wt%, 90.3wt%, 90.4wt%, 90.5wt%, 90.6wt%, 90.7wt%, 90.8wt%, 90.9wt%, 91wt%, 91.5wt%, 92wt%, 92.5wt%, 93wt%, 93.5wt%, 94wt%, 94.5wt%, 95wt%, 95.5wt%, 96wt%, and a random value within the range consisting of any two numerical values, preferably within the range of 92-95wt%.

According to the present invention, the mass ratio of $Fe_2O_3$ to $Al_2O_3$ is 0.02:1, 0.03:1, 0.04:1, 0.05:1, 0.06:1, 0.07:1, 0.08:1, 0.09:1, 0.1:1, and a random value within the range consisting of any two numerical values, preferably (0.03-0.08) : 1.

The present inventors have found that controlling the content of $Al_2O_3$ and controlling the mass ratio of $Fe_2O_3$ to

$Al_2O_3$, the diatomite has a more stable structure with a higher strength.

According to the present invention, the vanadium-based catalyst prepared from the treated diatomite as a carrier has a high strength, and is more likely to form the shape factor within the aforementioned range.

According to some preferred embodiments of the present invention, the content of $Al_2O_3$ is 2.5-4wt%, for example, 2.5wt%, 2.8wt%, 3wt%, 3.2wt%, 3.5wt%, 3.8wt%, 4wt%, and a random value within the range consisting of any two numerical values, preferably 2.8-3.5wt%.

According to some preferred embodiments of the present invention, the content of $Fe_2O_3$ is not greater than 0.3wt%, for example, 0.05wt%, 0.1wt%, 0.15wt%, 0.2wt%, 0.25wt%, 0.3wt%, and a random value within the range consisting of any two numerical values, preferably 0.1-0.3wt%.

The diatomite in the present invention has a high content of $SiO_2$, and a low content of impurity $Fe_2O_3$, its strength and stability are higher than natural diatomite and conventional diatomite.

The diatomite according to the present invention has higher stability while meeting the above parameter ranges.

According to some embodiments of the invention, the dispersing agent is one or more selected from the group consisting of sodium hexametaphosphate, sodium tripolyphosphate and sodium pyrophosphate.

According to the invention, the addition of a dispersing agent is more conducive to the removal of impurities (e.g., $Fe_2O_3$), increases the purity of $SiO_2$, and guarantees the content of $Al_2O_3$.

According to some embodiments of the invention, the addition amount of the dispersing agent is 1-5wt% of the diatomite.

According to some embodiments of the invention, the molar ratio of potassium element to vanadium element in the vanadium water is (2-4) :1, preferably (2.5-3.5) : 1.

According to some embodiments of the invention, the mass ratio of the treated diatomite to the auxiliary agent is (60-75) : (3.5-10), preferably (65-70) : (4-8).

Preferably, the auxiliary agent is one or more selected from the group consisting of sodium sulfate, rubidium sulfate, cesium sulfate, lanthanum oxide, cerium oxide and praseodymium oxide.

According to some embodiments of the invention, the mass ratio of the treated diatomite to the binder is (60-75) : (0.5-2.5), preferably (65-70) : (1-2).

Preferably, the binder is one or more selected from the group consisting of montmorillonite, attapulgite and methylcellulose.

The present inventors have discovered in researches that the presence of a small amount of impurities is independent of the activity of said catalyst, but strongly associated with the mechanical strength and service life of said catalyst. Therefore, the present application uses a kneading method to add a binder (e.g., montmorillonite) to an active ingredient and a carrier, fully combines the active component and the carrier more efficiently than the conventional kneading methods, enhances the bony strength of said carrier, and can prepare a catalyst with higher catalytic activity.

According to some embodiments of the invention, the mass ratio of said diatomite to said vanadium-containing compound is (60-75) : (6-8.5), for example, (60-75) :6, (60-75) :6.2, (60-75) :6.5, (60-75) :6.8, (60-75) :7, (60-75) :7.2, (60-75) :7.5, (60-75) :7.8, (60-75) :8, (60-75) :8.2, (60-75) :8.5, and a random value within the range consisting of any two numerical values, preferably (65-70) : (6.5-8).

According to some embodiments of the invention, the vanadium-containing compound comprises a pentavalent vanadium-containing compound, preferably vanadium pentoxide.

According to some embodiments of the invention, the temperature of the first calcination is within the range of 580-650°C, and the time is 1-2h.

According to some embodiments of the invention, the first calcination is performed in an atmosphere of superheated water vapor.

According to some embodiments of the invention, the temperature of the superheated water vapor is within the range of 120-150°C.

Preferably, the first calcination is carried out in a vertical tube furnace, and the saturated superheated water vapor at 120-150°C is introduced at the calcination inlet, and the saturated superheated water vapor is continuously introduced throughout the calcination process.

The inventors have found in researches that the introduction of wet air during the first calcination process can move the pore diameter distribution towards the direction of large pores compared to the calcination process without the introduction of wet air, therefore, when the water vapor is introduced during the calcination process, the humidified air plays a role of widening pores in the carrier, an average pore diameter after pore widening is within the range of about 150-500nm, which facilitates the diffusion of reactant molecules within the pores to the active sites on the internal surface of the catalyst.

The third aspect of the present invention provides a use of the vanadium-based catalyst according to the first aspect or the vanadium-based catalyst produced with the method according to the second aspect for catalytically oxidizing $SO_2$ to generate $SO_3$.

According to the present invention, when the shape factor $\varnothing_s$ of the vanadium-based catalyst of the present invention is within the range of 70-110, the catalyst can be used for catalytically oxidizing $SO_2$ to generate $SO_3$, the vanadium-based catalyst can achieve a relatively high $SO_2$ conversion rate and a relatively low bed pressure drop by means of a relatively low loading amount.

The fourth aspect of the present invention provides a method for preparing sulfuric acid with the wet process, the method comprises: contacting a feed gas with the vanadium-based catalyst according to the first aspect or the vanadium-based catalyst produced with the method according to the second aspect under the conditions for catalytically oxidizing $SO_2$ to generate $SO_3$, then carrying out condensation; wherein the feed gas contains $SO_2$, $O_2$ and water.

The vanadium-based catalyst of the invention is capable of catalytically oxidizing $SO_2$ in a feed gas to generate $SO_3$, ultimately producing the concentrated sulfuric acid. According to some embodiments of the invention, the contacting is carried out in a fixed bed reactor, and the loading factor of said vanadium-based catalyst is below 700L/(t·d), preferably within the range of 500-600 L/(t·d).

According to the present invention, the fixed bed reactor is an important device in a facility for preparing sulfuric acid with the wet process, the lower the loading factor indicates the lower the loading amount required.

According to some embodiments of the invention, the feed gas has a percentage $SO_2$ content of 1-9% by volume.

According to some embodiments of the invention, the percentage content of $O_2$ by volume in the feed gas is within the range of 2-22%. When the amounts of $O_2$ and water are insufficient, they may be added as needed.

According to some embodiments of the invention, the feed gas is waste acid cracking gas or acid gas.

According to some embodiments of the invention, an inlet temperature of said feed gas is within the range of 370-440°C.

The present invention will be described in detail below with reference to the preparation examples and example, but the protection scope of the present invention is not limited to the following description.

When the specific conditions were not indicated in the following preparation examples, examples and comparative examples, the preparation examples, examples and comparative examples were performed under the conventional conditions or the conditions recommended by the manufacturers. When the manufacturers of the reagents or instruments in use were not indicated, the reagents or instruments were the commercially available conventional products.

Diatomite raw material was a Changbai diatomite, wherein the $SiO_2$ content was 84.18wt%, $Fe_2O_3$ content was 1.14wt%, $Al_2O_3$ content was 4.38wt%, an average particle diameter was 2.7$\mu$m, and strength was 50N/cm.

Measurement methods of $SiO_2$ content, $Fe_2O_3$ content and $Al_2O_3$ content in diatomite: the method stipulated in the China Chemical Industry Standard HG/T2516-2013 "Analytical method of chemical composition in the catalyst oxidizing sulphuric dioxide into sulphuric acid".

The average particle diameter was measured by using an average particle size measuring instrument.

The average pore diameter and specific surface area of the catalyst were determined by using the BET method.

The catalyst strength was measured according to the method stipulated in the China Chemical Industry Standard HG/T2782-2011 "Test method for single pellet crush strength of fertilizer catalysts".

Preparation Example 1

The diatomite raw material was added into a hydrocyclone separator, a dispersing agent sodium hexametaphosphate in an amount of 2wt% relative to the diatomite raw material was simultaneously added, the slurry-feeding pressure was controlled to be 0.3MPa and the grading fineness was controlled to be 0.5$\mu$m, the centrifugation and impurity removal were performed, the raw material following the impurity removal was subjected to drying, and then subjected to calcination at 350°C for 2h, the treated diatomite S1 was obtained.

Upon detection, the treated diatomite S1 had a $SiO_2$ content of 90.1wt%, a $Fe_2O_3$ content of 0.2wt%, an $Al_2O_3$ content of 3.2wt%, the mass ratio of $Fe_2O_3$ to $Al_2O_3$ was 0.06, the average particle size was 1$\mu$m, the loss on ignition was 0.85%, and the bulk density was 0.42g/mL.

Preparation Example 2

The diatomite raw material was added into a hydrocyclone separator, a dispersing agent sodium hexametaphosphate in an amount of 5wt% relative to the diatomite raw material was simultaneously added, the slurry-feeding pressure was controlled to be 0.7MPa and the grading fineness was controlled to be 0.3$\mu$m, the centrifugation and impurity removal were performed, the raw material following the impurity removal was subjected to drying, and then subjected to calcination at 4000°C for 1.2h, the treated diatomite S2 was obtained.

Upon detection, the treated diatomite S2 had a $SiO_2$ content of 92wt%, a $Fe_2O_3$ content of 0.1wt%, an $Al_2O_3$ content of 3wt%, the mass ratio of $Fe_2O_3$ to $Al_2O_3$ was 0.03, the average particle size was 0.4$\mu$m, the loss on ignition was 0.5%, and the bulk density was 0.32g/mL.

Example 1

18.32kg of potassium hydroxide and 8.5kg of vanadium pentoxide were dissolved in water to prepare a vanadium water with the vanadium pentoxide concentration of 210g/L; 40.48L of vanadium water was taken and neutralized with 8.89L of concentrated sulfuric acid to obtain a mixed solution of $V_2O_5$ and $K_2SO_4$; the mixed solution was uniformly blended with 0.68kg of cesium sulfate, then added into a kneader along with 4.75kg of sodium sulfate, 55kg of treated diatomite S1 obtained in Preparation Example 1 and 2.33kg of montmorillonite, the materials were kneaded thoroughly, water was added to form a plasticity material, which was extruded strips into a catalyst with five petals and 4 apertures; the catalyst was subjected to drying, and then subjected to calcination at 650°C for 1h, the superheated water vapor at a temperature of 120°C was continuously introduced at a calcination inlet, 100kg of a vanadium-based catalyst C1 was prepared.

Upon detection, the aperture number N of said through holes in the vanadium-based catalyst C1 was 4, the pore diameter d of the through holes was 0.003m, the outer diameter D of the five-petal-shaped cross section was 0.017m, the aperture ratio ε was 0.124, the length was about 0.017m, and the bulk density ρ was 490kg/m$^3$. After calculation according to formula (1), the shape factor $\varnothing_s$ of the vanadium-based catalyst C1 was 88.

Example 2

13.55kg of potassium hydroxide and 7.1kg of vanadium pentoxide were dissolved in water to prepare a vanadium water with the vanadium pentoxide concentration of 210g/L; 33.8L of vanadium water was taken and neutralized with 7.43L of concentrated sulfuric acid to obtain a mixed solution of $V_2O_5$ and $K_2SO_4$; the mixed solution was added into a kneader along with 5.75kg of sodium sulfate, 64kg of treated diatomite S2 obtained in Preparation Example 2 and 1kg of montmorillonite, the materials were kneaded thoroughly, water was added to form a plasticity material, which was extruded strips into a catalyst with five petals and 2 apertures; the catalyst was subjected to drying, and then subjected to calcination at 600°C for 1h, the superheated water vapor at a temperature of 150°C was continuously introduced at a calcination inlet, 100kg of a vanadium-based catalyst C2 was prepared.

Upon detection, the aperture number N of said through holes in the vanadium-based catalyst C2 was 2, the pore diameter d of the through holes was 0.004m, the outer diameter D of the five-petal-shaped cross section was 0.015m, the aperture ratio ε was 0.125, the length was about 0.018m, and the bulk density ρ was 450kg/m$^3$. After calculation according to formula (1), the shape factor $\varnothing_s$ of the vanadium-based catalyst C2 was 98.

Example 3

15.7kg of potassium hydroxide and 7.5kg of vanadium pentoxide were dissolved in water to prepare a vanadium water with the vanadium pentoxide concentration of 220g/L; 34.1L of vanadium water was taken and neutralized with 7.85L of concentrated sulfuric acid to obtain a mixed solution of $V_2O_5$ and $K_2SO_4$; the mixed solution was added into a kneader along with 1kg of cerium oxide, 4.5kg of sodium sulfate, 61.6kg of treated diatomite S2 obtained in Preparation Example 2 and 1kg of montmorillonite, the materials were kneaded thoroughly, water was added to form a plasticity material, which was extruded strips into a catalyst with six petals and 3 apertures; the catalyst was subjected to drying, and then subjected to calcination at 600°C for 1h, the superheated water vapor at a temperature of 150°C was continuously introduced at a calcination inlet, 100kg of a vanadium-based catalyst C3 was prepared.

Upon detection, the aperture number N of said through holes in the vanadium-based catalyst C3 was 3, the pore diameter d of the through holes was 0.003m, the outer diameter D of the six-petal-shaped cross section was 0.015m, the aperture ratio ε was 0.12, the length was about 0.016m, and the bulk density ρ was 470kg/m$^3$. After calculation according to formula (1), the shape factor $\varnothing_s$ of the vanadium-based catalyst C3 was 95.

Example 4

15.1kg of potassium hydroxide and 7.0kg of vanadium pentoxide were dissolved in water to prepare a vanadium water with the vanadium pentoxide concentration of 230g/L; 30.43L of vanadium water was taken and neutralized with 7.32L of concentrated sulfuric acid to obtain a mixed solution of $V_2O_5$ and $K_2SO_4$; the mixed solution was added into a kneader along with 0.65kg of lanthanum oxide, 1kg of cerium sulfate, 4.5kg of sodium sulfate, 63.11kg of treated diatomite S2 obtained in Preparation Example 2 and 0.5kg of montmorillonite, the materials were kneaded thoroughly, water was added to form a plasticity material, which was extruded strips into a catalyst with five petals and 2 apertures; the catalyst was subjected to drying, and then subjected to calcination at 600°C for 1h, the superheated water vapor at a temperature of 150°C was continuously introduced at a calcination inlet, 100kg of a vanadium-based catalyst C4 was prepared.

Upon detection, the aperture number N of said through holes in the vanadium-based catalyst C4 was 2, the pore diameter d of the through holes was 0.003m, the outer diameter D of the five-petal-shaped cross section was 0.014m, the

aperture ratio $\varepsilon$ was 0.092, the length was about 0.02m, and the bulk density $\rho$ was 450kg/m$^3$. After calculation according to formula (1), the shape factor $\varnothing_s$ of the vanadium-based catalyst C4 was 76.

Example 5

15.1kg of potassium hydroxide and 7.0kg of vanadium pentoxide were dissolved in water to prepare a vanadium water with the vanadium pentoxide concentration of 230g/L; 30.43L of vanadium water was taken and neutralized with 7.32L of concentrated sulfuric acid to obtain a mixed solution of $V_2O_5$ and $K_2SO_4$; the mixed solution was added into a kneader along with 0.65kg of lanthanum oxide, 1kg of praseodymium oxide, 4.5kg of sodium sulfate, 63.11kg of treated diatomite S2 obtained in Preparation Example 2 and 0.5kg of montmorillonite, the materials were kneaded thoroughly, water was added to form a plasticity material, which was extruded strips into a catalyst with six petals and 4 apertures; the catalyst was subjected to drying, and then subjected to calcination at 600°C for 1h, the superheated water vapor at a temperature of 150°C was continuously introduced at a calcination inlet, 100kg of a vanadium-based catalyst C5 was prepared.

Upon detection, the aperture number N of said through holes in the vanadium-based catalyst C5 was 4, the pore diameter d of the through holes was 0.004m, the outer diameter D of the six-petal-shaped cross section was 0.019m, the aperture ratio $\varepsilon$ was 0.177, the length was about 0.019m, and the bulk density $\rho$ was 450kg/m$^3$. After calculation according to formula (1), the shape factor $\varnothing_s$ of the vanadium-based catalyst C5 was 109.

Example 6

The vanadium-based catalyst C6 was prepared according to the method of Example 4, except that the plasticity material was extruded strips into a catalyst with four petals and 4 apertures.

Upon detection, the aperture number N of said through holes in the vanadium-based catalyst C6 was 4, the pore diameter d of the through holes was 0.0025m, the outer diameter D of the five-petal-shaped cross section was 0.016m, the aperture ratio $\varepsilon$ was 0.098, the length was about 0.018m, and the bulk density $\rho$ was 500kg/m$^3$. After calculation according to formula (1), the shape factor $\varnothing_s$ of the vanadium-based catalyst C6 was 80.

Example 7

The vanadium-based catalyst C7 was prepared according to the method of Example 4, except that the plasticity material was extruded strips into a catalyst with six petals and 3 apertures.

Upon detection, the aperture number N of said through holes in the vanadium-based catalyst C7 was 3, the pore diameter d of the through holes was 0.0035m, the outer diameter D of the five-petal-shaped cross section was 0.017m, the aperture ratio $\varepsilon$ was 0.127, the length was about 0.02m, and the bulk density $\rho$ was 500kg/m$^3$. After calculation according to formula (1), the shape factor $\varnothing_s$ of the vanadium-based catalyst C7 was 78.

Example 8

The vanadium-based catalyst C8 was prepared according to the method of Example 4, except that the plasticity material was extruded strips into a catalyst with five petals and 6 apertures.

Upon detection, the aperture number N of said through holes in the vanadium-based catalyst C8 was 6, the pore diameter d of the through holes was 0.0048m, the outer diameter D of the five-petal-shaped cross section was 0.025m, the aperture ratio $\varepsilon$ was 0.22, the length was about 0.025m, and the bulk density $\rho$ was 500kg/m$^3$. After calculation according to formula (1), the shape factor $\varnothing_s$ of the vanadium-based catalyst C8 was 100.

Example 9

The vanadium-based catalyst C9 was prepared according to the method of Example 4, except that the superheated water vapor was not introduced at the calcination inlet during the calcination process.

Upon detection, the bulk density $\rho$ of the vanadium-based catalyst C9 was 470kg/m$^3$, the aperture ratio $\varepsilon$ was 0.092, the length was about 0.02m. After calculation according to formula (1), the shape factor $\varnothing_s$ of the vanadium-based catalyst C9 was 79.

Example 10

The vanadium-based catalyst C10 was prepared according to the method of Example 4, except that the treated diatomite S2 obtained in Preparation Example 2 was replaced with a diatomite raw material (untreated).

Upon detection, the bulk density ρ of the vanadium-based catalyst C10 was 440kg/m³, the aperture ratio ε was 0.092, the length was about 0.02m. After calculation according to formula (1), the shape factor Ø$_s$ of the vanadium-based catalyst C10 was 75.

Example 11

The vanadium-based catalyst C11 was prepared according to the method of Example 4, except that the treated diatomite S2 obtained in Preparation Example 2 was replaced with a diatomite raw material (untreated); the plasticity material was extruded strips into a catalyst with five petals and 4 apertures.

Upon detection, the aperture number N of said through holes in the vanadium-based catalyst C10 was 4, the pore diameter d of the through holes was 0.0032m, the outer diameter D of the five-petal-shaped cross section was 0.017m, the aperture ratio ε was 0.142, the length was about 0.02m, and the bulk density ρ was 450kg/m³. After calculation according to formula (1), the shape factor Ø$_s$ of the vanadium-based catalyst C10 was 107.

Comparative Example 1

The vanadium-based catalyst D1 was prepared according to the method of Example 4, except that the plasticity material was extruded strips into a catalyst with four petals and 4 apertures.

Upon detection, the aperture number N of said through holes in the vanadium-based catalyst D1 was 4, the pore diameter d of the through holes was 0.002m, the outer diameter D of the five-petal-shaped cross section is 0.013m, the aperture ratio ε was 0.095, the length was about 0.015m, and the bulk density ρ was 500kg/m³. After calculation according to formula (1), the shape factor Ø$_s$ of the vanadium-based catalyst D1 was 141.

Comparative Example 2

The vanadium-based catalyst D2 was prepared according to the method of Example 4, except that the plasticity material was extruded strips into a catalyst with five petals and 1 aperture.

Upon detection, the aperture number N of said through holes in the vanadium-based catalyst D2 was 1, the pore diameter d of the through holes was 0.0025m, the outer diameter D of the five-petal-shaped cross section was 0.009m, the aperture ratio ε was 0.077, the length was about 0.009m, and the bulk density ρ was 510kg/m³. After calculation according to formula (1), the shape factor Ø$_s$ of the vanadium-based catalyst D2 was 226.

Comparative Example 3

The vanadium-based catalyst D3 was prepared according to the method of Example 4, except that the plasticity material was extruded strips into a catalyst with five petals and 1 aperture.

Upon detection, the aperture number N of said through holes in the vanadium-based catalyst D3 was 1, the pore diameter d of the through holes was 0.01m, the outer diameter D of the five-petal-shaped cross section was 0.025m, the bulk density ρ was 470kg/m³, the aperture ratio ε was 0.016, the length was about 0.025m. After calculation according to formula (1), the shape factor Ø$_s$ of the vanadium-based catalyst D3 was 46.

Test Example

The catalysts obtained in Examples 1-11 and Comparative Examples 1-3 were filled in the first section bed layer of a SO$_2$ converter in the device for preparing sulfuric acid by means of the cracking of waste acid with a wet method; when the operation was stable, the pressure drop of said bed layer was detected by using a pressure difference meter to obtain a pressure drop of a single bed layer; along with the proceeding of the reaction, when the pressure drop of said bed layer was close to 2kPa, the sieving cycle was reached; wherein the SO$_2$ converter was an adiabatic reactor, the diameter of said reactor was 3,500mm. The inlet gas velocity of the reactor was 11,802 Nm³/h; the composition of the feedstock gas was as follows: SO$_2$: 5.34% (volume fraction), H$_2$O: 7.87% (volume fraction), the balance was air; the system pressure was atmospheric pressure. The results were shown in Table 1.

The SO$_2$ monolayer conversion rate was calculated according to the following formula:

$$E = \frac{\varphi_1 - \varphi_2}{\varphi_1(1 - 0.015\varphi_2)} \times 100\%$$

in the formula:

E denoted the $SO_2$ monolayer conversion rate, expressed with the unit of %;

$\varphi 1$ denoted the numerical value for the volume fraction of sulfur dioxide in the reactor inlet gas, expressed with the unit of %;

$\varphi 2$ denoted the numerical value for the volume fraction of sulfur dioxide in the reactor outlet gas, expressed with the unit of %.

The arithmetic mean values of continuous measurement results for three times were regarded as the measurement results; the absolute difference of the three measurement results shall not more than 1.0%.

Table 1

| Numbers | Shape factor ($\varnothing_s$) | Loading amount of catalyst ($m^3$) | $SO_2$ monolayer conversion rate (%) | Pressure drop of a single bed layer (kPa) | Catalyst strength (N/cm) | Sieving cycle (month) |
|---|---|---|---|---|---|---|
| Example 1 | 88 | 21 | 83.0 | 0.72 | 92 | 24 |
| Example 2 | 98 | 21 | 83.5 | 0.80 | 90 | 22 |
| Example 3 | 95 | 21 | 83.5 | 0.77 | 91 | 24 |
| Example 4 | 76 | 21 | 82.7 | 0.62 | 91 | 24 |
| Example 5 | 109 | 21 | 83.5 | 0.89 | 90 | 22 |
| Example 6 | 80 | 21 | 82.9 | 0.65 | 90 | 24 |
| Example 7 | 78 | 21 | 82.8 | 0.64 | 90 | 24 |
| Example 8 | 100 | 21 | 83.5 | 0.82 | 89 | 22 |
| Example 9 | 79 | 21 | 81.5 | 0.66 | 85 | 24 |
| Example 10 | 75 | 21 | 80.5 | 0.60 | 65 | 12 |
| Example 11 | 107 | 21 | 80.1 | 0.88 | 50 | 6 |
| Comparative Example 1 | 141 | 21 | 79.2 | 1.04 | 89 | 12 |
| Comparative Example 2 | 226 | 30 | 82.1 | 1.20 | 88 | 12 |
| Comparative Example 3 | 46 | 30 | 75.0 | 0.38 | 87 | 24 |

As can be seen from the results in Table 1, the shape factor $\varnothing_s$ of the catalyst obtained in Examples 1-11 of the present invention is within the range of 70-110, when the loading amount of catalyst is $21m^3$, the $SO_2$ monolayer conversion rate is greater than 81%, and the pressure drop of a single bed layer is less than 0.9 kPa.

In comparison with Example 4, both Examples 10 and Example 11 do not treat the diatomite raw material, the prepared catalysts have a lower strength and a shorter sieving cycle, especially in Example 11, where there are more apertures in the through holes, the sieving cycle is shorter. Therefore, the treatment on the diatomite raw material can improve the strength and the sieving cycle of the catalysts.

The catalyst obtained in Comparative Example 1 has a shape factor $\varnothing_s$ of 141, when reaching the same filing amount as in Example 4, the $SO_2$ monolayer conversion rate is only 79.2%, and the pressure drop of a single bed layer is as high as 1.04kPa.

The catalyst obtained in Comparative Example 2 has a shape factor $\varnothing_s$ of 226, when reaching the equivalent $SO_2$ monolayer conversion rate as Example 4, the loading amount is $30m^3$, and the pressure drop of a single bed layer is up to 1.2kPa

The catalyst obtained in Comparative Example 3 has a shape factor $\varnothing_s$ of 46, when the loading amount of the catalyst is obviously greater than that of Example 4, the $SO_2$ monolayer conversion rate is only 75.0%.

In summary, when the shape factor $\varnothing_s$ of the vanadium-based catalyst is within the range of 70-110, the vanadium-based catalyst of the invention can achieve a relatively high $SO_2$ conversion rate and a relatively low bed pressure drop by means of a relatively low loading amount. If the shape factor $\varnothing_s$ is too low, such as below 70, it will influence the gas flow distribution in the bed layer, which results in a too short residence time of the gas in the catalyst bed layer, and consequently causes that the conversion rate of $SO_2$ is low; if the shape factor $\varnothing_s$ is too high, such as above 110, it will result in the excessively high bed pressure drop.

The above content describes in detail the preferred embodiments of the present invention, but the present invention is not limited thereto. A variety of simple modifications can be made in regard to the technical solutions of the present invention within the scope of the technical concept of the present invention, including a combination of individual technical features in any other suitable manner, such simple modifications and combinations thereof shall also be regarded as the content disclosed by the present invention, each of them falls into the protection scope of the present invention.

**Claims**

1. A vanadium-based catalyst comprises a carrier and a vanadium-based active material loaded on the carrier, wherein the vanadium-based catalyst is of a strip-shaped structure having a multi-petal-shaped cross section, the number of petals in the multi-petal-shaped cross section is at least three, and there are at least two through holes in the strip-shaped structure in the direction of length thereof; and the shape factor $\varnothing_s$ of the vanadium-based catalyst is within the range of 70-110;

$$\varnothing_s = f \times \frac{\rho \varepsilon^3}{NDd^2(1-\varepsilon)} \qquad \text{Formula (1)}$$

in formula (1), $\varnothing_s$ denotes a shape factor;

f denotes a correction coefficient, $f=A/B$, $A=2.5* 10^{-4}$, B denotes the number of petals of a multi-petal-shaped cross section;
$\rho$ denotes a bulk density of the vanadium-based catalyst, and the unit is $kg/m^3$;
$\varepsilon$ denotes an aperture ratio of the vanadium-based catalyst;
N denotes the aperture number of said through holes;
d denotes a pore diameter of the through holes, and the unit is m;
D denotes an outer diameter of the multi-petal-shaped cross section, and the unit is m.

2. The vanadium-based catalyst according to claim 1, wherein the shape factor $\varnothing_s$ of the vanadium-based catalyst is within the range of 80-100.

3. The vanadium-based catalyst according to claim 1 or 2, wherein the carrier comprises diatomite; the content of $SiO_2$ is not less than 90wt% based on the total weight of the diatomite, and the mass ratio of $Fe_2O_3$ to $Al_2O_3$ is (0.02-0.1) : 1;

preferably, the content of $SiO_2$ is 92-95wt% based on the total weight of the diatomite, and the mass ratio of $Fe_2O_3$ to $Al_2O_3$ is (0.03-0.08) : 1;
preferably, the carrier is contained in an amount of 60-75wt%, more preferably 65-70wt%, based on the total weight of the vanadium-based catalyst.

4. The vanadium-based catalyst according to any one of claims 1-3, wherein the ratio of the outer diameter D of the multi-petal-shaped cross section to the pore diameter d of the through holes is (3-7) :1, preferably (4-6) : 1;
and/or, the ratio of the length L of the vanadium-based catalyst to the outer diameter D of the multi-petal-shaped cross section is (1-1.5) :1, preferably (1-1.2) : 1.

5. The vanadium-based catalyst according to any one of claims 1-4, wherein the number of petals in the multi-petal-shaped cross section is within the range of 3-8, preferably within the range of 5-6;

and/or, the number N of said through holes is within the range of 2-7, preferably within the range of 2-6;
and/or, the through holes are cylindrical.

6. The vanadium-based catalyst according to any one of claims 1-5, wherein the pore diameter d of the through holes is within the range of 3-5mm, preferably within the range of 3-4mm;

and/or, the vanadium-based catalyst has an aperture ratio within the range of 0.09-0.25, preferably within the range of 0.12-0.22;
and/or, the vanadium-based catalyst has a bulk density within the range of 400-550kg/m$^3$, preferably within the range of 450-500kg/m$^3$.

7. The vanadium-based catalyst according to any one of claims 1-6, wherein the vanadium-based catalyst has a strength larger than or equal to 70N/cm, preferably within the range of 80-120N/cm.

8. The vanadium-based catalyst according to any one of claims 1-7, wherein the mass ratio of the carrier to the vanadium-based active material is (60-75) : (6-8.5), preferably (65-70) : (6.5-8);
preferably, the vanadium-based active material comprises vanadium pentoxide.

9. The vanadium-based catalyst according to any one of claims 1-8, wherein the vanadium-based catalyst further comprises a potassium-containing compound, preferably potassium sulfate, loaded on the carrier;
preferably, the molar ratio of potassium element to vanadium element in the vanadium-based catalyst is (2-4) :1, more preferably (2.5-3.5) : 1.

10. The vanadium-based catalyst according to any one of claims 1-9, wherein the vanadium-based catalyst further comprises an auxiliary agent loaded on the carrier; the mass ratio of said carrier to said auxiliary agent is (60-75) : (3.5-10), preferably (65-70) : (4-8);
preferably, the auxiliary agent is one or more selected from the group consisting of sodium sulfate, rubidium sulfate, cesium sulfate, lanthanum oxide, cerium oxide and praseodymium oxide.

11. A method for preparing a vanadium-based catalyst, wherein the method comprises: kneading a vanadium-containing compound with diatomite, extruding strips to form a strip-shaped structure having a multi-petal-shaped cross section, the number of petals in the multi-petal-shaped cross section is at least three, and there are at least two through holes in the strip-shaped structure in the direction of length thereof; then carrying out a first calcination such that the shape factor $\emptyset_s$ of the vanadium-based catalyst is within the range of 70-110;

$$\emptyset_s = f \times \frac{\rho \varepsilon^3}{N D d^2 (1-\varepsilon)} \qquad \text{Formula (1)}$$

in formula (1), $\emptyset_s$ denotes a shape factor;

f denotes a correction coefficient, f = A/B, A =2.5*10$^{-4}$, B denotes the number of petals of a multi-petal-shaped cross section;
$\rho$ denotes a bulk density of the vanadium-based catalyst, and the unit is kg/m$^3$;
$\varepsilon$ denotes an aperture ratio of the vanadium-based catalyst;
N denotes the aperture number of said through holes;
d denotes a pore diameter of the through holes, and the unit is m;
D denotes an outer diameter of the multi-petal-shaped cross section, and the unit is m.

12. The method according to claim 11, wherein the step of kneading the vanadium-containing compound with diatomite comprises:

(1) separating and purifying a diatomite raw material and a dispersing agent in a hydrocyclone separator, drying, and then carrying out a secondary calcination to obtain a treated diatomite;
(2) carrying out neutralization reaction on vanadium water prepared from potassium hydroxide and vanadium pentoxide with sulfuric acid to obtain a reaction product; blending the reaction product with the treated diatomite, and an optional auxiliary agent and an optional binder, and then kneading the mixture.

13. The method according to claim 12, wherein the hydrocyclone separator has a slurry-feeding pressure within the range of 0.2-1MPa, preferably within the range of 0.3-0.8MPa; and a grading fineness within the range of 0.3-1μm, preferably within the range of 0.3-0.7μm;
and/or, the temperature of the second calcination is within the range of 350-500°C, preferably within the range of 350-450°C; the time is 1-2h, preferably 1.2-2 h.

14. The method according to claim 12 or 13, wherein the diatomite raw material is a melosira diatomite;

and/or, the content of $SiO_2$ in the treated diatomite is not less than 90wt%, preferably within the range of 92-95wt%; the mass ratio of $Fe_2O_3$ to $Al_2O_3$ is (0.02-0.1) :1, more preferably (0.03-0.08) : 1;
and/or, the dispersing agent is one or more selected from the group consisting of sodium hexametaphosphate, sodium tripolyphosphate and sodium pyrophosphate; preferably, the addition amount of the dispersing agent is 1-5wt% of the diatomite;

and/or, the molar ratio of potassium element to vanadium element in the vanadium water is (2-4) :1, preferably (2.5-3.5) : 1;

and/or, the mass ratio of the treated diatomite to the auxiliary agent is (60-75) : (3.5-10), preferably (65-70) : (4-8); preferably, the auxiliary agent is one or more selected from the group consisting of sodium sulfate, rubidium sulfate, cesium sulfate, lanthanum oxide, cerium oxide and praseodymium oxide;

and/or, the mass ratio of the treated diatomite to the binder is (60-75) : (0.5-2.5), preferably (65-70) : (1-2); preferably, the binder is one or more selected from the group consisting of montmorillonite, attapulgite and methylcellulose.

15. The method according to any one of claims 11-14, wherein the mass ratio of said diatomite to said vanadium-containing compound is (60-75) : (6-8.5), preferably (65-70) : (6.5-8); preferably, the vanadium-containing compound comprises a pentavalent vanadium-containing compound, more preferably vanadium pentoxide; and/or, the temperature of the first calcination is within the range of 580-650°C, and the time is 1-2h; preferably, the first calcination is performed in an atmosphere of superheated water vapor; more preferably, the temperature of the superheated water vapor is within the range of 120-150°C.

16. The method according to any one of claims 11-15, wherein the shape factor $Ø_s$ is within the range of 80-100;

and/or, the vanadium-based catalyst has an aperture ratio within the range of 0.09-0.25, preferably within the range of 0.12-0.22;

and/or, the vanadium-based catalyst has a bulk density within the range of 400-550kg/m$^3$, preferably within the range of 450-500kg/m$^3$;

and/or, the ratio of the outer diameter D of the multi-petal-shaped cross section to the pore diameter d of the through holes is (3-7) :1, preferably (4-6) : 1;

and/or, the number of petals in the multi-petal-shaped cross section is within the range of 3-8, preferably within the range of 5-6;

and/or, the number N of said through holes is within the range of 2-7, preferably within the range of 2-6.

17. Use of the vanadium-based catalyst according to any one of claims 1-10 or the vanadium-based catalyst produced with the method according to any one of claims 11-16 for catalytically oxidizing $SO_2$ to generate $SO_3$.

18. A method for preparing sulfuric acid with the wet process, wherein the method comprises: contacting a feed gas with the vanadium-based catalyst according to any one of claims 1-10 or the vanadium-based catalyst produced with the method according to any one of claims 11-16 under the conditions for catalytically oxidizing $SO_2$ to generate $SO_3$, then carrying out condensation; wherein the feed gas contains $SO_2$, $O_2$ and water.

19. The method according to claim 18, wherein the contacting is carried out in a fixed bed reactor, and the loading factor of said vanadium-based catalyst is below 700L/(t·d), preferably within the range of 500-600 L/(t·d).

20. The method according to claim 18 or 19, wherein the feed gas has a percentage $SO_2$ content of 1-9% by volume;

and/or, the feed gas is waste acid cracking gas or acid gas;

and/or, an inlet temperature of said feed gas is within the range of 370-440°C.

## INTERNATIONAL SEARCH REPORT

| International application No. |
| --- |
| **PCT/CN2024/125826** |

**A.    CLASSIFICATION OF SUBJECT MATTER**

B01J23/22(2006.01)i;  B01J32/00(2006.01)i;  B01J37/00(2006.01)i;  B01D53/86(2006.01)i

According to International Patent Classification (IPC) or to both national classification and IPC

**B.    FIELDS SEARCHED**

Minimum documentation searched (classification system followed by classification symbols)

IPC: B01J23/-、B01J32/-、B01J37/-、B01D53/-

Documentation searched other than minimum documentation to the extent that such documents are included in the fields searched

Electronic data base consulted during the international search (name of data base and, where practicable, search terms used)

CNABS, CNTXT, CNKI, ENTXT, VEN, Web of Science: 钒, 三氧化硫, 床层, 压降, 装填, vanadium, sulfur trioxide, SO3, bed, voltage drop, load

**C.    DOCUMENTS CONSIDERED TO BE RELEVANT**

| Category* | Citation of document, with indication, where appropriate, of the relevant passages | Relevant to claim No. |
| --- | --- | --- |
| A | CN 111065458 A (CHINA PETROLEUM & CHEMICAL CORPORATION et al.) 24 April 2020 (2020-04-24)<br>claims 1-11 | 1-20 |
| A | CN 111036242 A (CHINA PETROLEUM & CHEMICAL CORPORATION et al.) 21 April 2020 (2020-04-21)<br>entire document | 1-20 |
| A | US 2011250124 A1 (BASF SE) 13 October 2011 (2011-10-13)<br>entire document | 1-20 |
| A | WO 2011128830 A1 (BASF SE et al.) 20 October 2011 (2011-10-20)<br>entire document | 1-20 |

☐ Further documents are listed in the continuation of Box C.        ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **09 December 2024** | **23 January 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

# EP 4 744 771 A1

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| CN | 111065458 | A | 24 April 2020 | DK | 201901553 | A1 | 15 January 2020 |
| | | | | DK | 180890 | B1 | 14 June 2022 |
| | | | | DE | 112017007638 | T5 | 14 May 2020 |
| | | | | WO | 2018227362 | A1 | 20 December 2018 |
| | | | | US | 2020156045 | A1 | 21 May 2020 |
| | | | | US | 10940462 | B2 | 09 March 2021 |
| CN | 111036242 | A | 21 April 2020 | None | | | |
| US | 2011250124 | A1 | 13 October 2011 | US | 8323610 | B2 | 04 December 2012 |
| WO | 2011128830 | A1 | 20 October 2011 | KR | 20130097071 | A | 02 September 2013 |
| | | | | BR | 112012026246 | A2 | 12 July 2016 |
| | | | | EP | 2558197 | A1 | 20 February 2013 |
| | | | | EP | 2558197 | A4 | 26 March 2014 |
| | | | | JP | 2013523447 | A | 17 June 2013 |
| | | | | JP | 5833630 | B2 | 16 December 2015 |
| | | | | CL | 2012002875 | A1 | 14 December 2012 |

Form PCT/ISA/210 (patent family annex) (July 2022)

**EP 4 744 771 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202311366228